# FASCICULE DE BREVET EUROPEEN

(11) **EP 0 677 905 B1**
(45) Date de publication et mention de la délivrance du brevet: **11.08.1999**
(21) Numéro de dépôt: 95400800.9
(22) Date de dépôt: 10.04.1995
(51) Int. Cl.: H02B 13/02, H02B 11/10

(54) **Cellule à moyenne tension à disjoncteur autosectionneur avec indication de position**
Mittelspannung Schaltgerätzelle mit Stellungsanzeigevorrichtung
Medium voltage switchgear cell with position indication

(30) Priorité: 14.04.1994 FR 9404472
(43) Date de publication de la demande: 18.10.1995
(73) Titulaire: GEC ALSTHOM T ET D SA, 75016 Paris (FR)
(72) Inventeur: Starck, Thierry, F-34740 Vendargues (FR); Coq, Didier, F-34750 Villeneueve les Maguelone (FR)
(74) Mandataire: Gosse, Michel

(56) Documents cités:
- EP-A- 0 543 683
- DE-B- 1 046 138
- DE-U- 1 989 911
- DE-U- 7 110 062
- NL-A- 255 781

## Description

La présente invention concerne une cellule à moyenne tension à disjoncteur autosectionneur munie d'un dispositif destiné à indiquer la position du disjoncteur autosectionneur.

Un disjoncteur autosectionneur a été décrit notamment dans le brevet FR-A-2 683 939. Le principe d'un tel disjoncteur est rappelé maintenant. Il comprend, pour chaque phase, un "flambeau" comprenant une tête constituée par un élément de coupure (disjoncteur, contacteur ou interrupteur, ces organes étant réalisés soit au moyen d'ampoule à vide, soit avec isolation à l'hexafluorure de soufre SF6) relié à une première prise de courant, et une tige reliée à une seconde prise de courant. Un disjoncteur autosectionneur triphasé comprend trois flambeaux qui sont disposés parallèlement entre eux et fixés à une poutre qui porte en extrémité un mécanisme de commande. Le mécanisme de commande, solidaire de la poutre, assure la fonction interruption en assurant la mouvement en translation ou en rotation d'une tige reliée par des bielles aux contacts mobiles des éléments de coupure. La fonction sectionnement de l'appareil est assurée par la rotation (de préférence de 90°) autour d'elle-même de la poutre. L'ensemble constitué par les flambeaux et la poutre est logé dans une cellule électrique moyenne tension à enveloppe métallique contenant classiquement un jeu de barres et des départs de câbles.

La structure d'un disjoncteur autosectionneur étant rappelée, il convient d'examiner l'art antérieur relatif à la détermination de la position des appareils qui équipent les cellules à moyenne tension sous enveloppe métallique.

La position des divers appareils équipant les cellules à moyenne tension sous enveloppe métallique doit pouvoir être controlée visuellement depuis l'extérieur des cellules. Cette prescription est satisfaite, soit par contrôle visuel direct, à travers un hublot, de la distance de sectionnement ou de la distance d'isolement entre contacts ouverts, soit à travers un dispoisitif indicateur de position réputé sûr.

Dans le cas des cellules où le sectionnement est obtenu par débrochage de l'appareil de coupure (disjoncteur, contacteur ou interrupteur), le contrôle de sectionnement est généralement effectué par visualisation, à travers un hublot situé sur l'enveloppe externe de la cellule, de la position relative de la partie débrochable par rapport à un index fixe situé dans la cellule. Un tel système de contrôle par affichage de deux repères perpendiculairement l'un par rapport à l'autre, lorsque l'appareil de coupure est en position de sectionnement, est connu du document DE-A-3 413 458. L'état de la position "ouvert" ou "fermé" de l'appareil de coupure est, quant à lui, donné par un indicateur mécanique situé sur le boîtier de commande de l'appareil de coupure.

Cette disposition des indicateurs de position de ce type de cellule ne permet pas une visualisation claire et rapide de la position des appareils pour un opérateur se trouvant devant la cellule. En effet, les indicateurs de position doivent être observés à travers un ou plusieurs hublots avec des conditions d'éclairage à l'extérieur de la cellule souvent aléatoires. De plus, l'intervalle de sectionnement est en général masqué par l'appareil de coupure lui-même.

C'est pourquoi les utilisateurs imposent au constructeur de prévoir sur la face avant de la cellule un schéma synoptique composé de voyants électromagnétiques de signalisation, de figurines et de barrettes reproduisant le schéma unifilaire de la cellule.

Outre le coût relativement élevé de ces schémas synoptiques, leur principal inconvénient réside dans le fait que le fonctionnement des voyants nécessite une source d'alimentation électrique et dans le fait qu'ils ne peuvent constituer une indication de position parfaitement sûre. Ces schémas synoptiques ne peuvent donc être qu'un complément aux indicateurs mécaniques de position.

Un but de la présente invention est de réaliser une cellule à disjoncteur autosectionneur du type précité, munie d'un dispositif d'indication fonctionnant de manière entièrement mécanique avec une action directe assurant une fiabilité intrinsèque de la chaîne cinématique liant les indicateurs de positions aux appareils surveillés.

Un autre but de l'invention est de réaliser un dispositif reproduisant de manière exacte le mouvement de sectionnement rotatif du disjoncteur par rapport aux circuits amont et aval.

Un autre but de l'invention est de réaliser un dispositif ne nécessitant aucune source d'alimentation électrique.

Un autre but de l'invention est de réaliser un dispositif dont l'indication ne puisse pas se trouver en opposition avec la position réelle du disjoncteur autosectionneur.

L'invention a pour objet une cellule à moyenne tension comprenant un panneau ou porte d'accès à un disjoncteur autosectionneur comprenant pour chaque phase un pôle comprenant un organe de coupure tel qu'un disjoncteur, un contacteur ou un interrupteur, les pôles étant fixés à une poutre commune dont le pivotement autour d'un axe assure la fonction sectionnement du disjoncteur autosectionneur, les organes de coupure étant actionnés par une commande placée dans un boîtier solidaire de la poutre, ledit panneau ou porte d'accès portant un hublot permettant d'apercevoir de l'extérieur de la cellule une partie d'une face du boîtier de commande, ladite face comprenant une ouverture permettant d'apercevoir un voyant mécanique pouvant prendre deux positions selon l'état ouvert ou fermé des organes de coupure, ces positions étant matérialisées par un segment sur la surface du voyant, ladite face du boîtier de commande portant deux segments centrés sur ladite ouverture, disposés en alignement de part et d'autre de ladite ouverture et dont la ligne commune passe par l'axe géométrique de rotation de sectionnement, caractérisée en ce que le panneau ou porte d'accès porte deux segments disposés en alignement de part et d'autre du hublot et dont la ligne commune passe par l'axe géométrique de rotation de sectionnement.

Les segments portés par ladite face du boîtier et les segments dudit panneau ou porte d'accès sont tous alignés lorsque le disjoncteur autosectionneur est en position de service et désalignés lorsque le disjoncteur autosectionneur est en position de sectionnement ou d'essais.

Le segment du voyant mécanique et les segments portés par ladite face du boîtier sont alignés lorsque les organes de coupure du disjoncteur autosectionneur sont en position "fermé" et desalignés lorsque les organes de coupure du disjoncteur autosectionneur sont en position "ouvert".

Les segments du panneau ou porte d'accès sont complétés à une extrémité, l'un par un segment perpendiculaire figurant une liaison avec un jeu de barres, l'autre avec une flêche figurant une liaison avec une amenée de câbles, les deux segments comprenant chacun en outre à leur autre extrémité respective un arc de cercle figurant des éléments d'embrochage des parties mobiles extractibles.

Les deux états du voyant sont matérialisées par des positions angulaires à 90° l'une de l'autre, le sectionnement du disjoncteur autosectionneur se faisant par une rotation de 90°, les segments du panneau ou porte d'accès étant disposés verticalement.

L'invention sera bien comprise à la lecture de la description ci-après d'un exemple de réalisation, en référence au dessin annexé dans lequel:
- la figure 1 est une vue en perspective d'un disjoncteur autosectionneur triphasé,
- la figure 2 est une vue partielle d'un pôle d'un disjoncteur autosectionneur disposé dans un tiroir d'une cellule, le disjoncteur autosectionneur étant en position de fonctionnement,
- la figure 3 une vue partielle d'un pôle d'un disjoncteur autosectionneur disposé dans un tiroir d'une cellule, le disjoncteur autosectionneur étant en position de sectionnement,
- la figure 4 est une vue en coupe selon la ligne IV-IV de la figure 5,
- la figure 5 est une vue de la face avant, montrant le disjoncteur autosectionneur en position service, le disjoncteur étant fermé,
- la figure 6 est une vue de la face avant lorsque le disjoncteur autosectionneur est en position "service", avec le disjoncteur ouvert,
- la figure 7 est une vue de la face avant lorsque le disjoncteur autosectionneur est en position "sectionnée ou essais" avec le disjoncteur ouvert,
- la figure 8 est une vue de la face avant lorsque le disjoncteur autosectionneur est en position "sectionnée ou essais", avec le disjoncteur fermé.

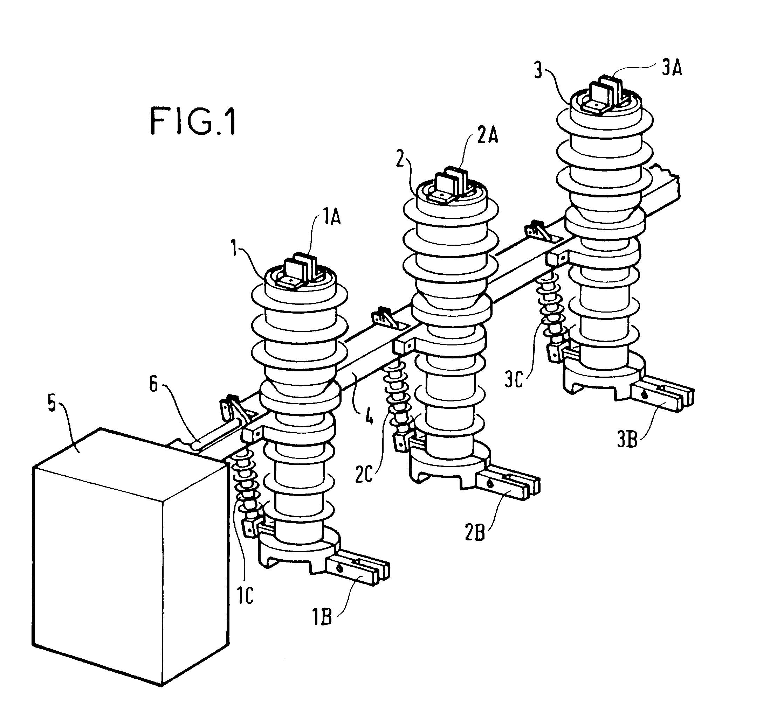

La figure 1 montre un disjoncteur autosectionneur triphasé comprenant trois "flambeaux" 1, 2 et 3 disposés parallèlement entre eux et fixés à une même poutre 4. La partie supérieure de chaque flambeau contient un organe de coupure (ampoule à vide par exemple), et une première prise 1A, 2A, 3A, destinée à coopérer avec une barre d'un jeu de barres. L'extrémité 1B, 2B, 3B, de la partie inférieure de chaque flambeau est munie d'une seconde prise de courant coopérant avec un câble d'amenée de courant. Un mécanisme de commande des organes de coupure est disposé dans un boîtier 5 solidaire de la poutre 4. Du boîtier 5 sort un arbre de commande 6 qui s'étend le long de la poutre et dont la rotation commande l'état ouvert ou fermé des organes de coupure, par l'intermédiaire de bielles 1C, 2C, 3C.

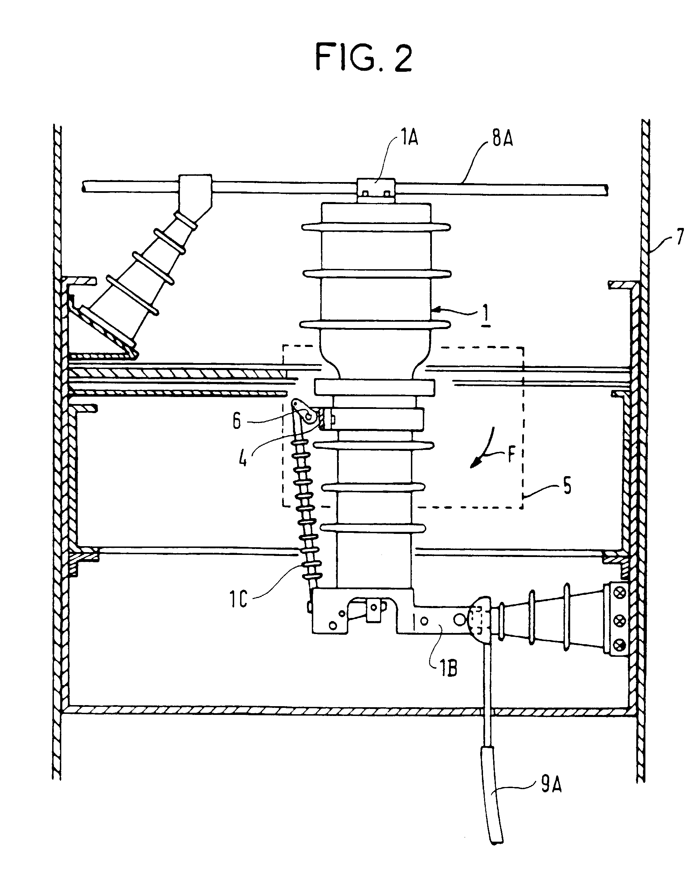

La figure 2 représente un pôle 1 d'un disjoncteur placé dans une cellule 7, dont la représentation a été simplifiée; la face avant de la cellule est située en avant du plan de la figure. Les autres pôles sont masqués par le pôle 1. Le disjoncteur est représenté en position de service. L'organe de coupure placé à la partie supérieure du flambeau 1 est fermé et le courant circule entre une barre 8A d'un jeu de barres triphasé et un câble 9A d'une arrivée de câbles. La ligne en pointillé 5 représente la position du boîtier de commande.

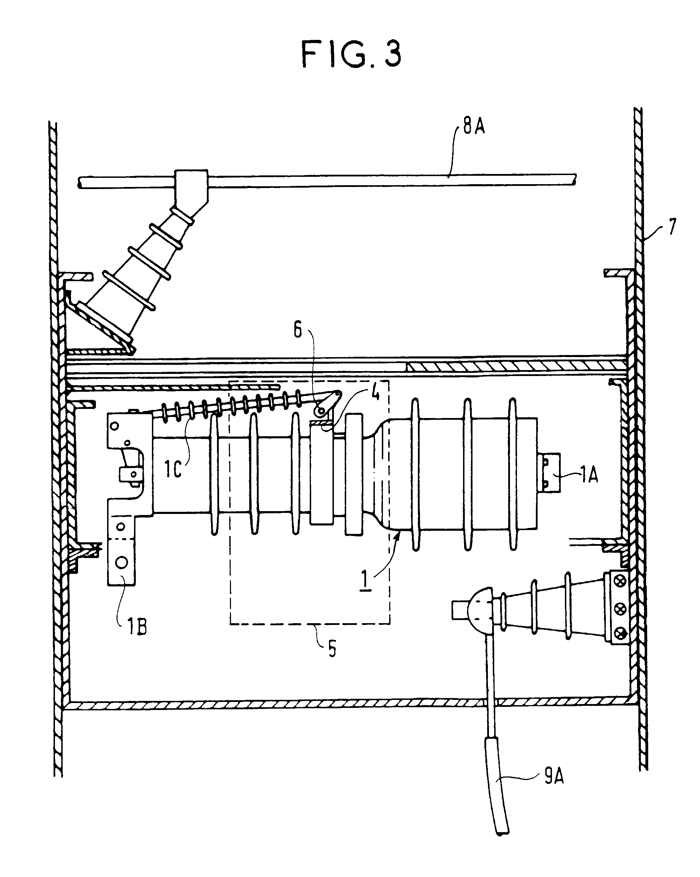

La figure 3 représente le pôle en position sectionnée. Avant d'opérer le sectionnement par rotation de l'ensemble des pôles autour de la poutre 4, les organes de coupure ont été ouverts par action du mécanisme de commande qui a provoqué le déplacement de la tringle de manoeuvre 6.

Dans l'exemple donné illustré par les figures, le sectionnement est assuré par une rotation de 90° de la poutre support des flambeaux. Cette valeur de 90° ne doit pas être considérée comme limitative, l'invention s'appliquant, mutatis mutandis, aux disjoncteurs autosectionneurs dans lesquels le sectionnement est assuré par une rotation d'un angle inférieur à 90°, 45° par exemple.

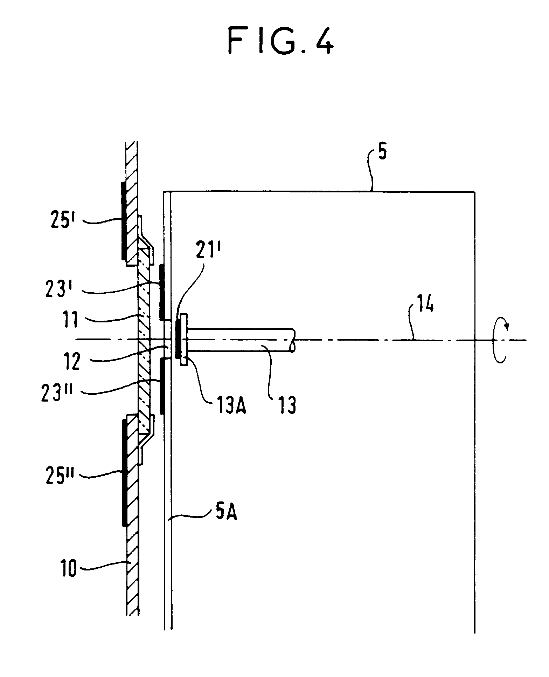

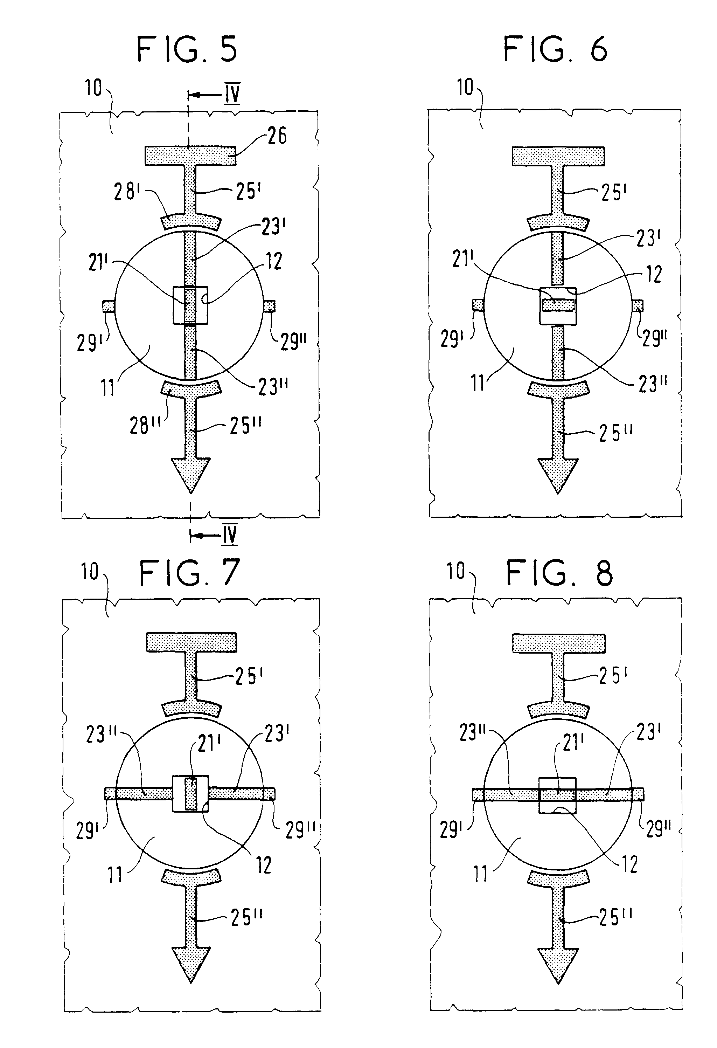

Les figures 4 et 5 montrent un panneau ou porte d'accès 10 en face avant de la cellule, qui comporte un hublot 11 par lequel on peut apercevoir le boîtier de commande 5 qui possède une face 5A parallèle au panneau ou porte 10; le boitier de commande 5 possède une ouverture 12 permettant d'apercevoir l'extrémité 13A d'un élément 13 pouvant passer d'une première position à une seconde position, ces positions étant représentatives de l'état ouvert ou fermé des organes de coupure du disjoncteur autosectionneur. Ce passage s'effectue par un mouvement de l'élément 13 qui peut être un mouvement rotatif ou un mouvement de translation. Dans le cas où ce mouvement est un mouvement rotatif, 1 élément 13 a le même axe de rotation que l'axe 14 de sectionnement par rotation du disjoncteur autosectionneur. Cet axe 14 est dans le prolongement de la poutre 4 mentionnée plus haut. L'élément pivotant 13 est perpendiculaire à la face avant 10 de la cellule et à la face 5A précitée. L'extrémité 13A est constituée par une petite plaque, de préférence rectangulaire, dont le plan est perpendiculaire à l'axe 13. On notera que le hublot 11 et l'ouverture 12 sont centrés sur l'axe 14.

Selon l'invention, la plaque d'extrémité 13A comprend un segment 21' centré sur l'axe 14 et visible de l'extérieur de la cellule.

La face 5A du boîtier de commande comporte deux segments de droite 23' et 23'', situés en alignement de part et d'autre de l'ouverture 12, et dont la ligne commune passe par l'axe de sectionnement 14 précité.

La porte 10 comprend des segments de droite 25' et 25'' disposés de part et d'autre du hublot 11, suivant une droite de préférence verticale coupant le prolongement de l'axe 14. Ces segments 25' et 25'' ont de préférence la même largeur et la même couleur que les segments 21', 23' et 23''. Les segments 25' et 25'' qui représentent le circuit principal de la cellule peuvent être complétés par un segment horizontal 26 situé à l'extrémité supérieure du segment 25' et représentant, comme il est d'usage dans les schémas synoptiques, le jeu de barre des cellules, et par une flêche 27 terminant l'extrémité inférieure du segment 25", qui représente habituellement un raccordement de câbles. Les segments 25' et 25'' peuvent également être complétés à leur extrémité côté hublot par deux arcs de cercles 28' et 28'' qui sont utilisés dans les schémas synoptiques pour représenter les éléments d'embrochage des parties mobiles extractibles.

Le panneau ou porte d'accès 10 comprend en outre deux petits segments 29' et 29", alignés et situés de part et d'autre du hublot, dont la ligne commune passe par l'axe géométrique de sectionnement 14. Ces segments servent à indiquer que la course de sectionnement est complètement effectuée.

Les segments peuvent être réalisés par dépôt de peinture, par exemple fluorescente, ou par tout autre moyen habituellement utilisé dans la technique de réalisaton des tableaux synoptiques.

La lecture du dispositif de l'invention est simple et claire.
1. **Position de service du disjoncteur autosectionneur**
   Cette position est indiquée par l'alignement des segments fixes 25' et 25'' et avec les segments 23' et 23''.
   Dans cette position de service, les organes de coupure du disjoncteur autosectionneur peuvent être en position "fermé" ou en position "ouvert".
   La position "fermé" des organes de coupure est indiquée par l'alignement de l'élément 21' par rapport aux éléments 23' et 23'' (Fig.5).
   La position "ouvert" des organes de coupure est indiquée par le désalignement de l'élément 21' par rapport aux éléments 23' et 23'''' (Fig.6).
**2. Position de sectionnement du disjoncteur autosectionneur (ou position d'essais)**
   Cette position est indiquée par le désalignement des éléments 23' et 23'' par rapport aux éléments fixes 25' et 25''.
   Là encore les organes de coupure peuvent être en position "ouvert" ou "fermé".
   La position "ouvert" des organes de coupure est indiquée par le désalignement de l'élément 21' par rapport aux éléments 23' et 23'' (Fig.7).
   La position "fermé" des organes de coupure est indiquée par l'alignement de l'élément 21' par rapport aux éléments 23' et 23'''' (Fig.8).

L'invention s'applique aux disjoncteurs autosectionneurs à moyenne tension à sectionnement par rotation de l'ensemble des pôles.

## Revendications

1. Cellule moyenne tension comprenant un panneau ou porte d'accès (10) à un disjoncteur autosectionneur comprenant pour chaque phase un pôle (1, 2, 3) comprenant un organe de coupure tel qu'un disjoncteur, un contacteur ou un interrupteur, les pôles étant fixés à une poutre (4) commune dont le pivotement autour d'un axe (14) assure la fonction sectionnement du disjoncteur autosectionneur, les organes de coupure étant actionnés par une commande placée dans un boîtier (5) solidaire de la poutre, le dit panneau ou porte d'accès (10) portant un hublot (11) permettant d'apercevoir de l'extérieur de la cellule une partie d'une face (5A) du boîtier de commande (5), ladite face (5A) comprenant une ouverture (12) permettant d'apercevoir un voyant mécanique (13, 13A) pouvant prendre deux positions selon l'état ouvert ou fermé des organes de coupure, ces positions étant matérialisées par un segment (21') sur la surface du voyant, ladite face (5A) du boîtier de commande (5) portant deux segment (23', 23") centrés sur ladite ouverture (12) , disposés en alignement de part et d'autre de ladite ouverture (12) et dont la ligne commune passe par l'axe géométrique (14) de rotation de sectionnement-, caractérisée en ce que
le panneau ou porte d'accès (10) porte deux segments (25', 25") disposés en alignement de part et d'autre du hublot (11) et dont la ligne commune passe par l'axe géométrique de rotation (14) de sectionnement.

2. Cellule à moyenne tension selon la revendication 1, caractérisée en ce que les segments (23', 23") portés par ladite face (5A) du boîtier (5) et les segments (25', 25") dudit panneau ou porte d'accès (10) sont tous alignés lorsque le disjoncteur autosectionneur est en position de service et désalignés lorsque le disjoncteur autosectionneur est en position de sectionnement ou d'essais.

3. Cellule à moyenne tension selon la revendication 2, caractérisée en ce que le segment (21') du voyant mécanique (13, 13A) et les segments (23', 23") portés par ladite face (5A) du boîtier (5) sont alignés lorsque les organes de coupure du disjoncteur autosectionneur sont en position "fermé" et désalignés lorsque les organes de coupure du disjoncteur autosectionneur sont en position "ouvert".

4. Cellule selon l'une des revendications 1 à 3, caractérisée en ce que les segments (25', 25") du panneau ou porte d'accès (10) sont complétés à une extrémité, l'un (25') par un segment perpendiculaire figurant une liaison avec un jeu de barres, l'autre (25") avec une flêche figurant une liaison avec une amenée de câbles, les deux segments (25', 25") comprenant chacun en outre à leur autre extrémité respective un arc de cercle (28', 28") figurant des éléments d'embrochage des parties mobiles extractibles.

5. Cellule selon l'une des revendications 1 à 4, caractérisée en ce que les deux états du voyant (13, 13A) sont matérialisés par des positions angulaires à 90° l'une de l'autre, que le sectionnement du disjoncteur autosectionneur se fait par une rotation de 90°, et que les segments (25', 25") du panneau ou porte d'accès sont disposés verticalement.

## Patentansprüche

1. Mittelspannungszelle, die eine Zugangsplatte oder Zugangstür (10) für den Zugang zu einem Trennschutzschalter umfaßt, der für jede Phase einen Pol (1, 2, 3) umfaßt, der ein Trennungsorgan wie etwa einen Schalter, einen Kontaktgeber oder einen Unterbrecher umfaßt, wobei die Pole an einem gemeinsamen Träger (4) befestigt sind, dessen Schwenken um eine Achse (14) die Trennungsfunktion des Trennschutzschalters bewirkt, wobei die Trennungsorgane durch eine Steuerung, die in einem Gehäuse (5), das fest mit dem Träger in Verbindung steht, betätigt werden, und wobei die Zugangsplatte oder Zugangstür (10) ein Fenster (11) trägt, das es erlaubt, von außerhalb der Zelle einen Teil einer Wand (5A) des Steuerungsgehäuses (5) zu erkennen, wobei die Wand (5A) eine Öffnung (12) umfaßt, die es ermöglicht, einen mechanischen Anzeiger (13, 13A) zu erkennen; der zwei Positionen entsprechend dem geöffneten oder geschlossenen Zustand der Trennungsorgane annehmen kann, wobei diese Positionen durch ein Segment (21') auf der Oberfläche des Anzeigers markiert werden, wobei die Wand (5A) des Steuergehäuses (5) zwei Segmente (23', 23") trägt, die zu der Öffnung (12) zentriert sind, die beiderseits der Öffnung (12) fluchtend angeordnet sind, und deren gemeinsame Linie durch die geometrische Trennungs-Drehachse (14) verläuft, dadurch gekennzeichnet, daß die Zugangsplatte oder Zugangstür (10) zwei Segmente (25', 25") trägt, die beiderseits des Fensters (11) fluchtend angeordnet sind und deren gemeinsame Linie durch die geometrische Trennungs-Drehachse (14) verläuft.

2. Mittelspannungszelle nach Anspruch 1, dadurch gekennzeichnet, daß die Segmente (23', 23"), die durch die Wand (5A) des Gehäuses (5) getragen werden, und die Segmente (25', 25") der Zugangsplatte oder -tür (10) alle fluchten, wenn der Trennschutzschalter in einer Betriebsposition ist, und nicht fluchten, wenn der Trennschutzschalter in einer Trennungsposition oder Versuchsposition ist.

3. Mittelspannungszelle nach Anspruch 2, dadurch gekennzeichnet, daß das Segment (21') des mechanischen Anzeigers (13, 13A) und die Segmente (23', 23"), die durch die Wand (5A) des Gehäuses (5) getragen werden, fluchten, wenn die Trennungsorgane des Trennschutzschalters in einer "geschlossenen" Position sind und nicht fluchten, wenn die Trennungsorgane des Trennschutzschalters in einer "offenen" Position sind.

4. Mittelspannungszelle nach einem der Ansprüche 1 bis 3, dadurch gekennzeichnet, daß die Segmente (25', 25") der Zugangsplatte oder -tür (10) an einem Ende vervollständigt sind, eines (25') durch ein rechtwinkliges Segment, das eine Verbindung mit einem Sammelschienensystem darstellt, das andere (25") mit einem Pfeil, der eine Verbindung mit einer Kabelzuführung darstellt, und die zwei Segmente (25', 25") jedes außerdem an ihrem jeweiligen anderen Ende einen Kreisbogen (28', 28") umfassen, der zusammensteckbare Elemente der herausziehbaren beweglichen Bereiche darstellt.

5. Anspruch nach einem der Ansprüche 1 bis 4, dadurch gekennzeichnet, daß die zwei Zustände des Anzeigers (13, 13A) durch Winkelpositionen unter 90° zueinander markiert sind, daß die Trennung des Trennschutzschalters durch eine 90°-Drehung erfolgt, und daß die Segmente (25', 25") der Zugangsplatte oder -tür (10) vertikal angeordnet sind.

## Claims

1. A medium-tension cell comprising an access door or panel (10) giving access to an isolating circuit breaker that comprises one pole (1, 2, 3) for each phase, each pole comprising a circuit-breaking member such as a circuit breaker, a contactor, or an interrupter, the poles being fixed on a common beam (4) which, by pivoting about an axis (14), serves to provide the isolating function of the isolating circuit breaker, the circuit-breaking members being actuated by a control mechanism placed in a housing (5) secured to the beam, said access door or panel (5) having a porthole (11) through which it is possible from outside the cell to observe a portion of a face (5A) of the control housing (5), said face (5A) including an opening (12) through which it is possible to see a mechanical indicator (13, 13A) that is capable of taking up two positions, depending on the "open" or "closed" state of the circuit-breaking members, said positions being represented by a segment (21') on the surface of the indicator, said face (5A) of the control housing (5) carrying two segments (23', 23") centred on said opening (12), disposed in alignment on either side of said opening (12), and together defining a line that intersects the geometrical axis (14) of rotation that is used for isolating purposes, characterized in that the access door or panel (10) carries two segments (25', 25") disposed in alignment on opposite sides of the porthole (11) such that the line they define in common intersects the geometrical axis (14) of rotation used for isolating purposes.

2. A medium-tension cell according to claim 1, characterized in that the segments (23', 23") carried by said face (5A) of the housing (5) and the segments (25', 25") of said access door or panel (10) are all in alignment when the isolating circuit breaker is in its in-service position, and are out of alignment when the isolating circuit breaker is in an isolating or test position.

3. A medium-tension cell according to claim 2, characterized in that the segment (21') of the mechanical indicator (13, 13A) and the segments (23', 23") carried by said face (5A) of the housing (5) are in alignment when the circuit-breaking members of the isolating circuit breaker are in the "closed" position, and are out of alignment when the circuit-breaking members of the isolating circuit breaker are in the "open" position.

4. A cell according to one of claims 1 to 3, characterized in that the segments (25', 25") of the access door or panel (10) have added to the ends thereof, in one case (25') a perpendicular segment representing a connection with a set of bus bars, and in the other case (25") an arrow representing a connection with a cable feed, each of the two segments (25', 25") further including at its respective opposite ends, an arc of a circle (28', 28") representing the pluggable elements of the extractable moving parts.

5. A cell according to one of claims 1 to 4, characterized in that the two states of the indicator (13, 13A) are given by angular positions that are at 90° to each other, the isolating circuit breaker performs isolation by rotation through 90°, and the segments (25', 25") of the access door or panel are disposed vertically.
